# EUROPÄISCHE PATENTSCHRIFT

(11) **EP 1 224 088 B1**
(45) Veröffentlichungstag und Bekanntmachung des Hinweises auf die Patenterteilung: **25.02.2004**
(21) Anmeldenummer: 00972761.1
(22) Anmeldetag: 12.10.2000
(51) Int. Cl.: B60G 17/04, B60G 17/056

(54) **HYDROPNEUMATISCHE FEDERUNG**
HYDROPNEUMATIC SUSPENSION SYSTEM
SUSPENSION HYDROPNEUMATIQUE

(30) Priorität: 12.10.1999 DE 19949152
(43) Veröffentlichungstag der Anmeldung: 24.07.2002
(73) Patentinhaber: MOWAG Motorwagenfabrik AG, 8280 Kreuzlingen (CH)
(72) Erfinder: GREUTER, Adolf, CH-8272 Ermatingen (CH); SCHROETER, Jens, CH-8280 Kreuzlingen (CH); OSTERWALDER, Franz, CH-8280 Kreuzlingen (CH); DOLL, Bernhard, CH-8573 Siegershausen (CH)
(74) Vertreter: Strych, Werner Maximilian Josef, Dr.
(86) Internationale Anmeldenummer: PCT/EP2000/010102
(87) Internationale Veröffentlichungsnummer: WO 2001/026923

(56) Entgegenhaltungen:
- DE-A- 4 334 227
- FR-A- 2 692 846
- US-A- 5 116 077
- US-A- 5 342 080
- US-A- 5 458 218

## Beschreibung

### I. Anwendungsgebiet

Die Erfindung betrifft eine hydropneumatische Federung bzw, die Vorgehensweise beim Steuern einer solchen hydropneumatischen Federung, wie sie insbesondere bei geländegängigen Kraftfahrzeugen verwendet wird.

Das Fahrverhalten von geländegängigen Fahrzeugen hängt zum einen von den statischen Voraussetzungen, wie beispielsweise Gewicht und Verteilung der Beladung, ab, und andererseits von dynamischen Faktoren, beispielsweise der Fahrgeschwindigkeit, Größe und Frequenz der Unebenheiten des Untergrundes etc..

Der Vorteil der hydropneumatischen Federung liegt prinzipiell darin, durch Veränderung z. B. des Ölvolumens in den einzelnen Hydropfedern, das Federungsverhalten der einzelnen Hydropfedem und damit des gesamten Federungssystems verändern zu können, abhängig von statischen und/oder dynamischen Faktoren.

### II. Technischer Hintergrund

In diesem Zusammenhang sind bereits Systeme bekannt, die mit Hilfe einer Vielzahl von Sensoren diese statischen und dynamischen Parameter laufend erfassen und über einen komplexen Rechner die optimale Vorspannung der einzelnen Hydropfedern, also deren Ölvolumen, einstellen.

Diese Systeme sind jedoch aufwendig in der Herstellung und wegen der großen Anzahl von insbesondere elektrischen und elektronischen Komponenten im rauhen Einsatz, beispielsweise beim Militär, einerseits in hohem Maße ausfallgefährdet und andererseits wenig reparaturfreundlich, da eine Wiederherstellung auf rein mechanischem Wege in der Regel nicht möglich ist. Um zu einem einfachen, auch leicht zu reparierenden, hydropneumatischen Federungssystem zu gelangen, ist es darüber hinaus aus der gattungsbildenden DE 195 05 712 bereits bekannt, abhängig vom Beladungszustand, also einem statischen Faktor, das Volumen der einzelnen Hydropfedern durch ein feststehendes Zusatzvolumen entweder zu vergrößern oder zu vermindern. Dabei ist weder eine automatische Anpassung vorgesehen, noch kann die Größe des Zusatzvolumens verändert werden. Auch eine Anpassung des Federungssystems an dynamische Faktoren ist dadurch nicht möglich.

### III. Darstellung der Erfindung

### a) Technische Aufgabe

Es ist daher die Aufgabe gemäß der vorliegenden Erfindung, ein hydropneumatisches Federungssystem sowie ein Steuerungsverfahren hierfür zu schaffen, welches trotz einfachem und kostengünstigem sowie reparaturfreundlichem Aufbau die Berücksichtigung sowohl statischer als auch dynamischer Faktoren erlaubt und darüber hinaus sowohl eine manuelle als auch eine automatische Steuerung ermöglicht.

### b) Lösung der Aufgabe

Diese Aufgabe wird durch die Merkmale der Ansprüche 1 und 14 gelöst. Vorteilhafte Ausführungsformen ergeben sich aus den Unteransprüchen.

Dabei sind die Volumina jeweils zweier einander entsprechender Hydropfedern vorne und hinten am Fahrzeug, also bei einem vierrädrigen Fahrzeug beispielsweise die linken vorderen sowie hinteren Hydropfedern des Fahrzeugs, miteinander gekoppelt. Neben den Volumina der beiden beteiligten Hydropfedern ist weiterhin das Dosiervolumen eines Dosierzylinders vorhanden, wobei diese drei Bauteile über eine Lastverteileinheit miteinander verbunden sind, die drei unterschiedliche Schaltstellungen einnehmen kann:
- Verbindung der Volumina der beiden Hydropfedern untereinander als auch mit dem Dosierzylinder,
- Verbindung nur der Volumina der beiden Hydropfedern miteinander und
- Abtrennung der drei Baueinheiten voneinander, also separate Wirkung jeder einzelnen Hydropfeder.

Das Dosiervolumen des Dosierzylinders ist dabei kein festes Volumen, sondern es wird mittels des Dosierzylinders bei Bedarf eine zu ermittelnde Menge an Dosiervolumen in das System, also in das gekoppelte Volumen der beiden beteiligten Hydropfedern, eingegeben bzw. mit Hilfe des Dosierzylinders entnommen.

Im folgenden ist die gesamte Erfindung beschrieben in Form einer Veränderung des Ölvolumens der beteiligten Hydropfedem und damit auch eines Dosiervolumens des Dosierzylinders in Form von Hydrauliköl.

Die Veränderung des Ölvolumens einer Hydropfeder verlagert den Arbeitspunkt entlang der Federkennlinie der Hydropfeder nach oben, also in Richtung höherer Vorspannung.

Anstelle der Veränderung des Ölvolumens ist jedoch auch, oder ergänzend zur Veränderung des Ölvolumens, die Beeinflussung des Gasvolumens möglich. In diesem Fall enthält das Dosiervolumen des Dosierzylinders selbstverständlich ebenfalls Gas.

Die z. B. Erhöhung des Gasvolumens einer Hydropfeder bewirkt jedoch - unter Beibehaltung des momentanen Arbeitspunktes - eine Verlagerung der gesamten Federkennlinie nach oben.

Unabhängig davon sind die am Fahrzeug spürbaren Auswirkungen der Veränderung nicht unähnlich, so daß die beiden grundsätzlich gegebenen Möglichkeiten, also Beeinflussung des Ölvolumens und/oder Gasvolumens der Hydropfedern eines hydropneumatischen Federungssystems, durchaus substitutiv oder einander ergänzend eingesetzt werden können.

Zusätzlich zu den beschriebenen drei Schaltstellungen der Lastverteileinheit weist die strömungstechnische Verbindung der beiden Hydropfedern eine Ausgleichsschaltung auf, die die Art des Überströmens beeinflußt, und ebenso weist die Verbindung des Dosierzylinders zu den beiden Hydropfedern eine Dosierschaltung auf, die ebenfalls die Art des Überströmens beeinflußt. Ausgleichsschaltung und Dosierschaltung bewirken eine Anpassung des hydropneumatischen Federungssystems an die dynamischen Parameter ohne Einsatz von Sensoren und umsetzenden Steuerungs- bzw. Regelungselementen.

Die Lastverteileinheit enthält beispielsweise ein Rückschlagventil, welches ein schnelles Überströmen von der hinteren zur vorderen Hydropfeder ermöglicht, in umgekehrter Richtung jedoch sperrt und nur über eine Drossel umgangen werden kann, so daß ein Rückströmen nur ungleich langsamer erfolgen kann.

Die Dosierschaltung kann identisch aufgebaut sein, mit Durchgangsrichtung von dem Dosierzylinder zu den Hydropfedern, enthält jedoch zumindest eine nicht umgehbare Drossel, um ein zu schnelles Nachströmen oder auch Abströmen von Dosiervolumen aus den Hydropfedern zu vermeiden.

Zusätzlich kann in einem Bypass zur Ausgleichsschaltung ein Druckbegrenzungsventil zwischen der vorderen Hydropfeder und der hinteren Hydropfeder bzw. dem Dosierzylinder angeordnet sein, welches einerseits als Sicherheitsventil für die vordere Hydropfeder (Öffnen des Druckbegrenzungsventils bei zu hohem Druck in der vorderen Hydropfeder) und andererseits dem Einströmen von Dosiervolumen von dem Dosierzylinder direkt in die vordere Hydropfeder dient, also unter Umgehung der Drosseln der Ausgleichsschaltung, um in der vorderen Hydropfeder schneller Zusatzvolumen unterzubringen und damit die vordere Hydropfeder schneller zu "versteifen" als die hintere Hydropfeder.

Beide Maßnahmen dienen dazu, die bei überlasteten Hydropfederungen fast immer zuerst an den Vorderachsen und damit Lenkungen von Fahrzeugen auftretenden Beschädigungen zu vermeiden und primär die vorderen Hydropfedern schnell und ausreichend versteifen zu können, während dies bei den hinteren Hydropfedern auch mit gewisser Zeitverzögerung in der Regel noch ausreichend ist.

### Dadurch ergeben sich folgende Möglichkeiten:

Fahren auf glattem bzw. wenig unebenem Untergrund ohne bzw. bei geringer Steigung:
a) bei gleichmäßiger Beladung des Fahrzeuges: die Hydropfedern sind voneinander getrennt; je nach Stärke der Beladung ist vor der Trennung Dosiervolumen in die noch miteinander verbundenen Hydropfedern im erforderlichen Maß eingebracht worden.
b) bei ungleichmäßiger Beladung: nach Einbringen des Dosiervolumens in die gekoppelten Hydropfedem wird die Verbindung zum Dosierzylinder gesperrt, und nur die beiden Hydropfedern bleiben verbunden. Dadurch wird an der stark belasteten Hydropfeder der Arbeitspunkt für die Lastaufnahme erhöht.

### Fahren bei mäßiger Steigung:

Gegebenenfalls nach Einbringen eines Dosiervolumens wird die Verbindung zum Dosierzylinder gesperrt, die Hydropfedern bleiben jedoch miteinander verbunden, um vor allem beim Bergabfahren die stark belastete Vorderachse bei Auftreten von dynamischer Belastung jeweils schnell zu versteifen.

Fahren auf ebenem Untergrund mit mäßiger Frequenz des Auftretens von dynamischen Belastungen aufgrund Bodenunebenheiten, also Fahrgeschwindigkeit im Vergleich zu Abstand der Unebenheiten nicht allzu hoch:

Zur Verbesserung des Fahrkomforts bleibt das Dosiervolumen in strömungstechnischer Verbindung mit beiden Hydropfedern, um das insgesamt zur Verfügung stehende Volumen zu vergrößern und ein hinsichtlich der Geschwindigkeit begrenztes, aber ständiges Nachfließen und Zurückfließen von Volumen aus dem Dosierzylinder zu ermöglichen.

Hohe Frequenz des Auftretens von dynamischen Belastungen durch Bodenunebenheiten in Relation zur Fahrgeschwindigkeit:

Aufgrund der Drosseln in der Ausgleichsschaltung sowie der Dosierschaltung ist ein Nachströmen von Volumen aus dem Dosierzylinder in die beiden Hydropfedern mit der notwendigen Geschwindigkeit, um die auftretenden dynamischen Belastungen zu kompensieren, ohnehin nicht möglich. Dennoch verbleibt die Verbindung zwischen Dosierzylinder und/oder den Hydropfedern offen, um zumindest ein schnelles Rückströmen von Volumen aus der ersten Hydropfeder zu ermöglichen, falls sich dort ein zu hoher Druck aufbaut.

Es darf noch darauf hingewiesen werden, daß unter den statischen Faktoren nicht nur die Beladung des Fahrzeuges zu verstehen ist, sondern beispielsweise auch die Temperatur, vor allem im Gas der Hydropfeder, die sich entweder aufgrund der Außentemperatur oder auch aufgrund der Reibung bei ständiger Aus- und Einfederung der Hydropfeder sehr unterschiedlich einstellen kann, jedoch die Erhöhung der Temperatur die gleiche Wirkung wie eine Erhöhung des Gasvolumens bewirkt, also eine Verlagerung der Federkennlinie weiter nach oben, also in Richtung höherer Vorspannung, und damit ebenfalls einer Kompensation bedarf.

### c) Ausführungsbeispiele

Eine Ausführungsform der Erfindung ist anhand der Figuren näher beschrieben.
Es zeigen:
- Fig. 1:: Ein Prinzipschaltbild der hydropneumatischen Federung und
- Fig. 2:: die Lastverteileinheit 2 dieser Federung als Blockschaltbild.

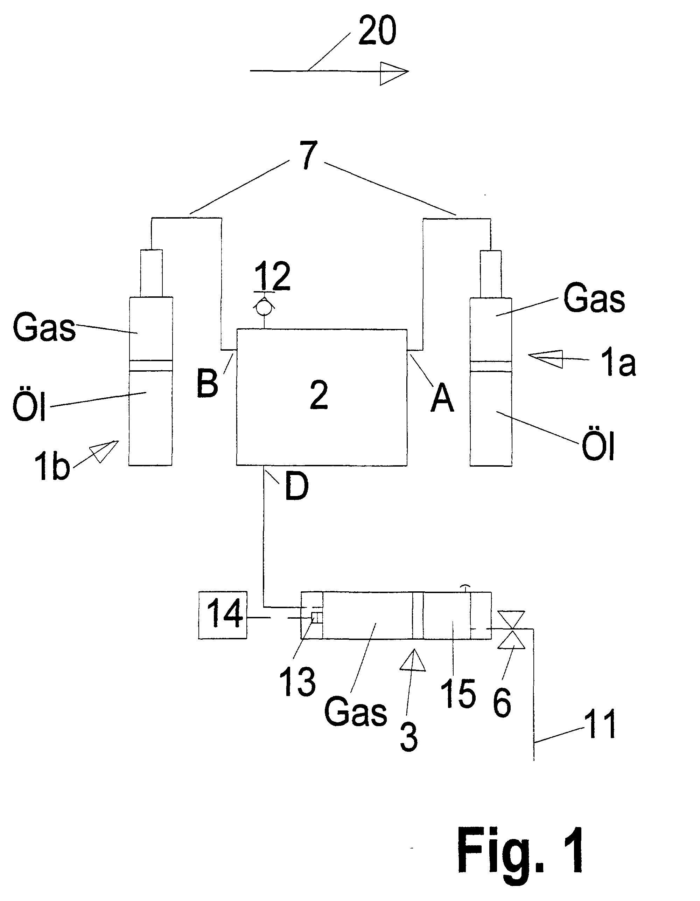

Fig. 1 zeigt die prinzipielle Verschaltung der Komponenten der erfindungsgemäßen Federung.

Die in Fahrtrichtung 20 vordere Hydropfeder 1a sowie die hintere Hydropfeder 1b sind dabei jeweils mit ihrem Gasvolumen über Ausgleichsleitungen 7 an der nur symbolisch dargestellten Lastverteileinheit 2 angeschlossen, wobei die vordere Hydropfeder 1a am Anschluß A anliegt und die hintere Hydropfeder 1b am Anschluß B.

Die Lastverteileinheit 2 weist ferner einen Anschluß D auf, der mit dem Dosiervolumen 9 eines Dosierzylinders 3 verbunden ist, welches in diesem Fall ebenfalls ein Gasvolumen ist.

Im Dosierzylinder 3 befindet sich zwischen dem mit Gas gefüllten Dosiervolumen 9 und dem benachbarten Arbeitsraum 15 ein Dosierkolben 10. Durch Beaufschlagen des Arbeitsraumes 15, der über ein z. B. regelbares Steuerventil 6 mit dem Arbeitsdruck 11 verbunden werden kann, kann der Druck im Arbeitsraum 15 gesteuert, also erhöht oder erniedrigt, werden, was in einer Verlagerung des Dosierkolbens 10 resultiert und damit Teile des Dosievolumens 9 aus dem Dosierzylinder auspreßt oder dorthin zurückfließen läßt.

Der im Dosiervolumen 9 herrschende Druck wird vorzugsweise mittels eines daran angeordneten Drucksensors 13 überprüft, welcher mit einer entsprechenden Prüfvorrichtung 14 in Verbindung steht.

Die Hydropfedern 1a, 1b weisen bekanntermaßen ein Gasvolumen sowie ein benachbartes Ölvolumen auf, welche durch eine Membran oder einen Kolben so voneinander getrennt sind, daß sich die Relation des Gasvolumens zu Ölvolumen innerhalb des Gesamtvolumens ändern kann, z. B. wegen der Komprimierung des Gasvolumens.

Das Gasvolumen ist durch die Kolbenstange, an welcher das (nicht dargestellte) Rad befestigt ist, belastet.

Dabei soll nochmals darauf hingewiesen werden, daß anstelle der Gasvolumina der Hydropfedern 1a, 1b sowie des Dosierzylinders 3 auch deren jeweilige Ölvolumina an der Lastverteileinheit angeschlossen und damit miteinander in Verbindung gebracht sein können.

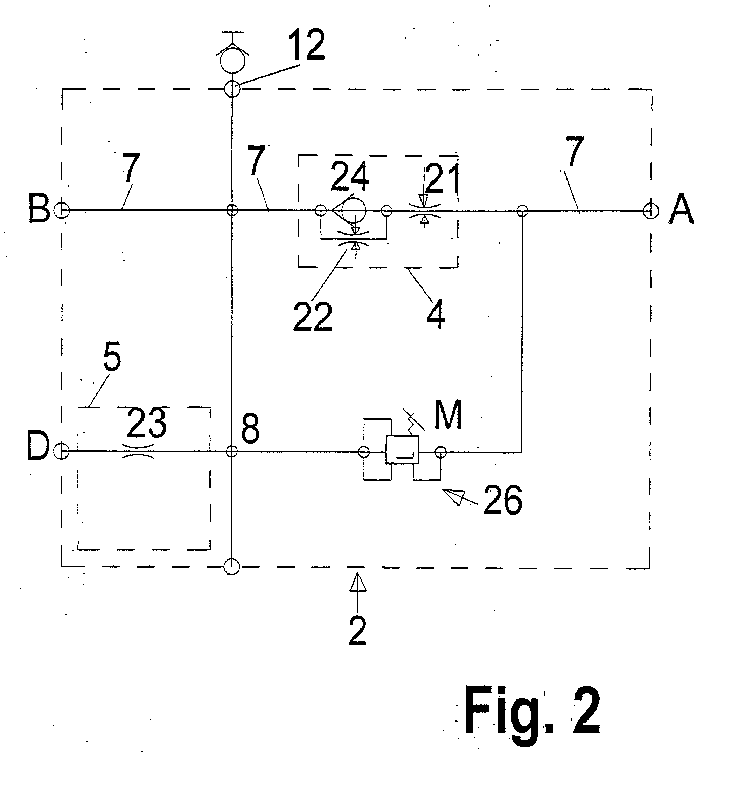

Fig. 2 zeigt den inneren Aufbau der Lastverteileinheit 2 als Blockschaltbild. Die beiden Anschlüsse A und B für die Hydropfedern 1a, 1b stehen über eine Ausgleichsschaltung 4 miteinander in Verbindung. Diese weist zum einen ein Rückschlagventil 24 auf, welches in Richtung zum Anschluß A, also in Richtung der vorderen Hydropfeder 1a, durchströmt werden kann, in Gegenrichtung jedoch sperrt. In Reihe mit dem Rückschlagventil 24 ist eine Drossel 21 in der Ausgleichsleitung 7 zwischen den Anschlüssen A und B angeordnet, welche den Durchfluß in beiden Fließrichtungen auf das Öffnungsmaß dieser Drossel 21 begrenzt.

Zusätzlich ist parallel zum Rückschlagventil 24 eine weitere Drossel 22 angeordnet, deren Öffnungsdurchmesser somit nur den Durchfluß in der Fließrichtung vom Anschluß A in Richtung Anschluß B bzw. D bestimmt, in welcher das Rückschlagventil 24 sperrt.

Der Ast der Ausgleichsleitung 7 zum Anschluß B, also der hinteren Hydropfeder hin, ist ferner mit einer Dosierschaltung 5 verbunden, welche auf der anderen Seite mit dem Anschluß D für den Dosierzylinder 3 in Verbindung steht. Diese Dosierschaltung 5 besteht im einfachsten Fall lediglich aus einer Drossel 23, die in beiden Richtungen die Fließgeschwindigkeit vom oder zum Dosierzylinder 3 begrenzt.

Zusätzlich ist zwischen dieser Dosierschaltung 5 und dem Ast der Ausgleichsleitung 7, der mit dem Anschluß A in Verbindung steht, ein Überdruckventil 26 so angeordnet, daß nach Überschreiten des eingestellten Drucks ein Durchfluß vom Anschluß A zum Verzweigungspunkt 8 möglich ist. Da der Verzweigungspunkt 8 unmittelbar vor der Dosierschaltung 5 angeordnet ist und mit dem dem Anschluß B zugeordneten Ast der Ausgleichsleitung 7 in Verbindung steht, fließt dann das Fluid sowohl in Richtung Anschluß B als auch durch die Dosierschaltung 5 zum Anschluß D.

Das Überdruckventil 26, welches vorzugsweise in seinem Gegendruck einstellbar ist, kann dagegen in der Richtung zum Anschluß A hin nicht durchströmt werden.

Dieses Überdruckventil 26 dient somit primär als Sicherheitsventil dagegen, daß das Gasvolumen der am Anschluß A angeschlossenen Hydropfeder 1a unter zu hohen Druck gerät.

Die Lastverteileinheit 2 weist ferner einen Füllanschluß 12 auf, der mit dem dem Anschluß B zugeordneten Ast der Ausgleichsleitung 7 verbunden ist.

In den vorbeschriebenen Fällen sind jeweils zwei, eine vordere und eine hintere, Hydropfeder 1a, 1b über eine Ausgleichsschaltung 2 miteinander sowie mit einem Dosierzylinder 3 verbindbar.

Bei mehr als zwei hintereinander angeordneten Hydropfedern bzw. Achsen können je zwei aufeinanderfolgende Hydropfedern mittels einer vorbeschriebenen Ausgleichsschaltung 2 miteinander verbindbar sein. Dabei kann auch jedes Paar von Hydropfedern mit einem separaten oder einem gemeinsamen Dosierzylinder 3 wie vorbeschrieben verbindbar sein.

### BEZUGSZEICHENLISTE

- 1: Hydropfeder
- 2: Lastverteileineit
- 3: Dosierzylinder
- 4: Ausgleichsschaltung
- 5: Dosierschaltung
- 6: Steuerventil
- 7: Ausgleichsleitung
- 8: Verzweigungspunkt
- 9: Dosiervolumen
- 10: Dosierkolben
- 11: Arbeitsdruck
- 12: Füllanschluß
- 13: Drucksensor
- 14: Prüfvorrichtung
- 15: Arbeitsraum
- 20: Fahrtrichtung
- 21: Drossel
- 23: Drossel
- 24: Rückschlagventil
- 26: Überdruckventil

## Patentansprüche

1. Hydropneumatische Federung, insbesondere für Kraftfahrzeuge, mit wenigstens einer vorderen Hydropfeder (1a) und wenigstens einer hinteren Hydropfeder (1b), die
- über eine Lastverteileinheit (2) miteinander als auch mit einem Dosierzylinder (3) strömungstechnisch verbunden sind, wobei die Lastverteileinheit (2) wenigstens folgende Schaltstellungen aufweist:
a) strömungstechnische Separierung der Hydropfedern (1a, b)
b) strömungstechnische Verbindung nur der beiden angeschlossenen Hydropfedern (1a, b) miteinander und
c) strömungstechnische Verbindung der beiden Hydropfeder (1a, b) und des Dosierzylinders (3) miteinander, **dadurch gekennzeichnet, daß**
- die Lastverteileinheit (2) in einer Ausgleichsleitung (7) zwischen den Anschlüssen (A, B) für die Hydropfedem (1a, b) eine Ausgleichsschaltung (4) aufweist,
- der Dosieranschluß (D) der Lastverteileinheit (2), weicher mit dem Dosierzylinder (3) in Verbindung steht, mit beiden Ästen der Ausgleichsleitung (7), also beidseits der Ausgleichsschaltung (4), verbunden ist,
- eine Dosierschaltung (5) zwischen dem Dosieranschluß (D) der Lastverteileinheit (2) und dem Verzweigungspunkt (8) zu den Ästen der Ausgleichsleitung (7) angeordnet ist, und
- Ausgleichsschaltung (4) als auch Dosierschaltung (5) keine Sensoren sowie deren Signale umsetzende, elektrische oder elektronische Steuerungs- oder Regelungselemente aufweist.

2. Hydropneumatische Federung nach Anspruch 1,
**dadurch gekennzeichnet, daß**
die Gasvolumina der Hydropfedem (1a, 1b) mit dem gasgefüllten Volumen des Dosierzylinders (3) in Verbindung bringbar sind.

3. Hydropneumatische Federung nach einem der vorhergehenden Ansprüche,
**dadurch gekennzeichnet, daß**
die Ölvolumina der Hydropfedem (1a, b) mit dem ölgefüllten Volumen des Dosierzylinders (3) in Verbindung bringbar sind.

4. Hydropneumatische Federung nach einem der vorhergehenden Ansprüche,
**dadurch gekennzeichnet, daß**
die Ausgleichsschaltung (4) eine Drossel (21) aufweist.

5. Hydropneumatische Federung nach einem der vorhergehenden Ansprüche,
**dadurch gekennzeichnet, daß**
die Ausgleichsschaltung (4) so ausgebildet ist, daß ein Überströmen vom Anschluß (B) für die hintere Hydropfeder (1b) zum Anschluß (A) für die vordere Hydropfeder (1a) schneller möglich ist als umgekehrt.

6. Hydropneumatische Federung nach einem der vorhergehenden Ansprüche,
**dadurch gekennzeichnet, daß**
die Ausgleichsschaltung (4) ein Rückschlagventil (24) aufweist, weiches in der Richtung von Anschluß (B) für die hintere Hydropfeder (1b) nach Anschluß (A) für die vordere Hydropfeder (1a) öffenbar ist und welches insbesondere in Reihe mit der Drossel (21) geschaltet ist.

7. Hydropneumatische Federung nach einem der vorhergehenden Ansprüche,
**dadurch gekennzeichnet, daß**
in der Ausgleichsschaltung (4) eine weitere Drossel (22) im Bypass zum Rückschlagventil (24) geschaltet ist.

8. Hydropneumatische Federung nach einem der vorhergehenden Ansprüche,
**dadurch gekennzeichnet, daß**
die Dosierschaltung (5) der Lastverteileinheit (2) identisch wie die Ausgleichsschaltung (4) bestückt ist, insbesondere mit einer Öffnungsrichtung eines Rückschlagventils vom Dosieranschluß (D) zur Ausgleichsleitung (7).

9. Hydropneumatische Federung nach einem der vorhergehenden Ansprüche,
**dadurch gekennzeichnet, daß**
die Dosierschaltung (5) eine Drossel (23), insbesondere nur eine Drossel (23), enthält.

10. Hydropneumatische Federung nach einem der vorhergehenden Ansprüche,
**dadurch gekennzeichnet, daß**
zwischen der Dosierschaltung (5) und dem mit dem Vorderachsanschluß (A) verbundenen Ast der Ausgleichsleitung (7) ein Überdruckventil (26) so angeordnet ist, daß bei zu hohem Druck auf der Seite des Anschlusses (A) eine Öffnung unter Ableitung zum Verzweigungspunkt (8) zwischen Dosieranschluß (D) und Hinterachsanschluß (B) möglich ist.

11. Hydropneumatische Federung nach einem der vorhergehenden Ansprüche,
**dadurch gekennzeichnet, daß**
der Dosieranschluß (D) vollständig sperrbar ist.

12. Hydropneumatische Federung nach einem der vorhergehenden Ansprüche,
**dadurch gekennzeichnet, daß**
die Ausgleichsleitung (7), insbesondere die Anschlüsse (A, B), vollständig sperrbar sind.

13. Hydropneumatische Federung nach einem der vorhergehenden Ansprüche,
**dadurch gekennzeichnet, daß**
die Beaufschlagung des Dosierkolbens (10) des Dosierzylinders (3) auf der vom Dosiervolumen (9) abgewandten Seite manuell und/oder automatisch durch die Fahrzeugsteuerung bestimmbar ist.

14. Verfahren zum Steuern einer hydropneumatischen Federung, insbesondere der Federung eines Kraftfahrzeuges, mit mehreren Hydropfedem (1a, b), die strömungstechnisch miteinander und auch mit einem Dosierzylinder (3) verbindbar sind, insbesondere einer hydropneumatischen Federung nach einem der vorhergehenden Ansprüche,
**dadurch gekennzeichnet, daß**
a) bei geringen dynamischen Beeinflussungen des Fahrzeuges abhängig von statischen Faktoren, Fluid aus dem Dosierzylinder in den Verbund aus den Hydropfedern eingegeben und danach die Hydropfedem strömungstechnisch voneinander separiert werden,
b) bei mäßigen dynamischen Beeinflussungen des Fahrzeuges abhängig von statischen Faktoren Fluid aus dem Dosierzylinder in den Verbund aus den Hydropfedern zugegeben und die Verbindung zwischen den beiden Hydropfedern als auch die Verbindung mit dem Dosierzylinder offen bleibt, und
c) bei schweren dynamischen Beeinflussungen Fluid aus dem Dosierzylinder in den Verbund aus den Hydropfedem eingegeben und die Verbindung zwischen den Hydropfedem und dem Dosiervolumen offen bleibt, ein schnelles Überströmen zwischen den beiden Hydropfedem bzw. zwischen den Hydropfedem und dem Dosierzylinder jedoch verhindert wird.

15. Verfahren nach Anspruch 14,
**dadurch gekennzeichnet, daß**
ein statischer Faktor der Beladungszustand des Fahrzeuges ist.

16. Verfahren nach einem der vorhergehenden Verfahrensansprüche,
**dadurch gekennzeichnet, daß**
ein statischer Faktor die Temperatur des Gases im Federungssystem, insbesondere in den Hydropfedem, ist.

17. Verfahren nach einem der vorhergehenden Verfahrensansprüche,
**dadurch gekennzeichnet, daß**
die dynamischen Faktoren direkt an den Radaufhängungen, insbesondere denjenigen der Vorderachse, insbesondere direkt an den Hydropfedem, ermittelt und davon abhängig automatisch die Vorgehensweise gemäß den Varianten a, b, c des Anspruchs 14 gewählt und insbesondere die Größe der Zudosierung aus dem Dosierzylinder (3) gewählt wird.

18. Verfahren nach einem der vorhergehenden Verfahrensansprüche,
**dadurch gekennzeichnet, daß**
bei hohen dynamischen Belastungen ein schnelles Rückströmen aus der vorderen Hydropfeder (1a) über ein Öffnen des Überdruckventils in die hintere Hydropfeder (B) und/oder den Dosierzylinder (3) möglich ist, insbesondere ohne Durchlaufen einer Drossel.

## Claims

1. A hydropneumatic suspension, in particular for motor vehicles, comprising at least one front hydropneumatic spring (1a) and at least one rear hydropneuamtic spring (1b) which are in flow communication
- by way of a load distribution (2) with each other and also with a metering cylinder (3), wherein the load distribution unit (2) has at least the following switching positions:
a) flow separation of the hydropneumatic springs (1a, 1b),
b) flow communication only of the two connected hydropneumatic springs (1a, b) to each other, and
c) flow communication of the two hydropneumatic springs (1a, b) and the metering cylinder (3) to each other,
**characterized in that**
- load distribution unit (2) has in a compensating line (7) between the connections (A, B) for the hydropneumatic springs (1a, b) a compensating circuit (4),
- the metering connection (D) of the load distribution unit (2), which is in communication with the metering cylinder (3), is connected to both arms of the compensating line (7), that is to say on both sides of the compensating circuit (4),
- a metering circuit (5) is arranged between the metering connection (D) of the load distribution unit (2) and the branch point (8) to the arms of the compensating line (7), and
- the compensating circuit (4) and also the metering circuit (5) have no sensors and electrical or electronic control or regulating elements for converting the signals thereof.

2. A hydropneumatic suspension according to claim 1 **characterised in that** the gas volumes of the hydropneumatic springs (1a, 1b) can be brought into communication with the gas-filled volume of the metering cylinder (3).

3. A hydropneumatic suspension according to one of the preceding claims **characterised in that** the oil volumes of the hydropneumatic springs (1a, 1b) can be brought into communication with the oil-filled volume of the metering cylinder (3).

4. A hydropneumatic suspension according to one of the preceding claims **characterised in that** the compensating circuit (4) has a throttle (21).

5. A hydropneumatic suspension according to one of the preceding claims **characterised in that** the compensating circuit (4) is such that a transfer flow from the connection (B) for the rear hydropneumatic spring (1b) to the connection (A) for the front hydropneumatic spring (1a) is possible more quickly than vice-versa.

6. A hydropneumatic suspension according to one of the preceding claims **characterised in that** the compensating circuit (4) has a non-return valve (24) which is openable in the direction from the connection (B) for the rear hydropneumatic spring (1b) towards the connection (A) for the front hydropneumatic spring (1a) and which is connected in particular in series with the throttle (21).

7. A hydropneumatic suspension according to one of the preceding claims **characterised in that** a further throttle (22) is connected in the compensating circuit (4) in by-pass relationship with the non-return valve (24).

8. A hydropneumatic suspension according to one of the preceding claims **characterised in that** the metering circuit (5) of the load distribution unit (2) is identically equipped to the compensating circuit (4), in particular with an opening direction of a non-return valve from the metering connection (D) to the compensating line (7).

9. A hydropneumatic suspension according to one of the preceding claims **characterised in that** the metering circuit (5) includes a throttle (23), in particular only one throttle (23).

10. A hydropneumatic suspension according to one of the preceding claims **characterised in that** a pressure-relief valve (26) is arranged between the metering circuit (5) and the arm of the compensating line (7), which is connected to the front axle connection (A), in such a way that, with an excessively high pressure on the side of the connection A), opening is possible with diversion to the branch point (8) between the metering connection (D) and the rear axle connection (B).

11. A hydropneumatic suspension according to one of the preceding claims **characterised in that** the metering connection (D) can be completely shut off.

12. A hydropneumatic suspension according to one of the preceding claims **characterised in that** the compensating line (7) and in particular the connections (A, B) can be completely shut off.

13. A hydropneumatic suspension according to one of the preceding claims **characterised in that** actuation of the metering plunger (10) of the metering cylinder (3) on the side which is remote from the metering volume (9) can be determined manually and/or automatically by the vehicle control system.

14. A method of controlling a hydropneumatic suspension, in particular the suspension of a motor vehicle, having a plurality of hydropneumatic springs (1a, b) which can be brought into flow communication with each other and also with a metering cylinder (3), in particular a hydropneumatic suspension according to one of the preceding claims,
**characterised in that**
a) with low dynamic influences on the vehicle, in dependence on static factors, fluid is introduced from the metering cylinder into the assembly comprising the hydropneumatic springs and thereafter the hydropneumatic springs are separated from each other in respect of flow,
b) in the case of moderate dynamic influences on the vehicle, in dependence on static factors, fluid is added from the metering cylinder into the assembly comprising the hydropneumatic springs and the connection between the two hydropneumatic springs and also the connection to the metering cylinder remains open, and
c) in the case of heavy dynamic influences, fluid is introduced from the metering cylinder into the assembly comprising the hydropneumatic springs and the connection between the hydropneumatic springs and the metering volume remains open, but a rapid transfer flow between the two hydropneumatic springs or between the hydropneumatic springs and the metering cylinder is prevented.

15. A method according to claim 14 **characterised in that** a static factor is the load state of the vehicle.

16. A method according to one of the preceding method claims **characterised in that** a static factor is the temperature of the gas in the suspension system, in particular in the hydropneumatic springs.

17. A method according to one of the preceding method claims **characterised in that** the dynamic factors are ascertained directly at the wheel mountings, in particular those of the front axle, in particular directly at the hydropneumatic springs, and in dependence thereon in an automatic mode the procedure in accordance with the variants a, b and c of claim 14 is selected and in particular the magnitude of the feed metering from the metering cylinder (3) is selected.

18. A method according to one of the preceding method claims **characterised in that** with high dynamic loadings a fast return flow from the front hydropneumatic spring (1a) is possible by way of opening of the pressure-relief valve into the rear hydropneumatic spring (B) and/or the metering cylinder (3), in particular without passing through a throttle.

## Revendications

1. Suspension hydropneumatique, spécialement pour véhicules à moteur, avec au moins un ressort hydropneumatique (1a), antérieur et au moins un ressort hydropneumatique (1b) postérieur, qui - par l'entremise d'une unité de répartition de la charge (2) sont connectés de manière aérodynamique l'un avec l'autre et aussi avec un cylindre de dosage (3), où l'unité de répartition de la charge (2) présente au moins les suivantes positions de connexion:
a) la séparation aérodinamique des ressorts hydropneumatiques (1a, b)
b) la connexion aérodynamique, l'un avec l'autre seulement pour les deux ressorts hydropneumatiques (1a,b) connectés, et
c) la connexion aérodynamique entre les deux ressorts hydropneumatiques (1a,b) et le cylindre de dosage (3), **caractérisée en ce que**,
- l'unité de répartition de la charge (2) présente sur un conduit de compensation (7) entre les raccords (A,B) pour les ressorts hydropneumatiques (1a,b) un circuit de compensation (4),
- entre le raccord de dosage (D) de l'unité de répartition de la charge (2) et le point de ramification (8) vers les deux côtés du conduit de compensation (7) est disposé un circuit de dosage (5) et
- tant le circuit de compensation (4) que le circuit de dosage (5) ne présentent pas de senseurs ou autres éléments électriques ou électroniques de commande ou de réglage pour convertir les signaux de ceux-ci.

2. Suspension hydropneumatique selon la revendication 1, **caractérisée en ce que**, les volumes de gaz des ressorts hydropneumatiques (1a, 1b) peuvent être connectés avec le volume de gaz du cylindre de dosage (3).

3. Suspension hydropneumatique selon l'une des revendications antérieures, **caractérisée en ce que**, les volumes d'huile des ressorts hydropneumatiques (1a, 1b) peuvent être connectés avec le volume d'huile du cylindre de dosage (3).

4. Suspension hydropneumatique selon l'une des revendications antérieures, **caractérisée en ce que**, le circuit de compensation (4) présente un clapet (21).

5. Suspension hydropneumatique selon l'une des revendications antérieures, **caractérisée en ce que**, le circuit de compensation (4) est tellement formé de sorte qu' une surintensité de courant soit possible plus rapidement du côté du raccord (B) pour le ressort hydropneumatique (1b) postérieur vers le raccord (A) pour le ressort hydropneumatique (1a) antérieur, que dans le sens inverse.

6. Suspension hydropneumatique selon l'une des revendications antérieures, **caractérisée en ce que**, le circuit de compensation (4) présente une soupape de retenue (24) qui est ouverte dans la direction du côté du raccord (B) pour le ressort hydropneumatique (1b) postérieur vers le raccord (A) pour le ressort hydropneumatique antérieur (1a) et qui spécialement est couplée en ligne avec le clapet (21).

7. Suspension hydropneumatique selon l'une des revendications antérieures, **caractérisée en ce que**, dans le circuit de compensation (4) est connecté un autre clapet (22) en dérivation par rapport à la soupape de retenue (24).

8. Suspension hydropneumatique selon l'une des revendications antérieures, **caractérisée en ce que**, le circuit de dosage (5) de l'unité de répartition de la charge (2) est équipé de manière identique avec le circuit de compensation (4), spécialement avec le sens d'ouverture de la soupape de retenue du côté du raccord de dosage (D) vers le conduit de compensation (7).

9. Suspension hydropneumatique selon l'une des revendications antérieures, **caractérisée en ce que**, le circuit de dosage (5) comprend un clapet (23), seulement un clapet (23).

10. Suspension hydropneumatique selon l'une des revendications antérieures, **caractérisée en ce que**, entre le circuit de dosage (5) et le côté du conduit de compensation (7) qui est lié au raccord de l'essieu avant (A) est disposée une soupape de décharge (26), de sorte qu'à une pression trop grande sur la partie du raccord (A) soit possible une ouverture d'évacuation vers le point de ramification (8) entre le raccord de dosage (D) et le raccord de l'essieu arrière (B).

11. Suspension hydropneumatique selon l'une des revendications antérieures, **caractérisée en ce que**, le raccord de dosage (D) peut être complètement fermé.

12. Suspension hydropneumatique selon l'une des revendications antérieures, **caractérisée en ce que**, le conduit de compensation (7), spécialement les raccords (A, B) peuvent être complètement fermés.

13. Suspension hydropneumatique selon l'une des revendications antérieures, **caractérisée en ce que**, l'actionnement du piston de dosage (10) du cylindre de dosage (3) sur la partie opposée par rapport au volume de dosage (9), peut être établi manuellement et/ou automatiquement par le circuit de commande du véhicule.

14. Procédé pour la commande d'une suspension hydropneumatique, spécialement à une suspension de véhicule moteur à plusieurs ressorts hydropneumatiques (1a,b) qui peuvent être interconnectés dans un mode aérodynamique et aussi avec un cylindre de dosage (3), spécialement une suspension hydropneumatique selon l'une des revendications antérieures, **caractérisé en ce que**,
a) À petites influences dynamiques du véhicule en fonction des facteurs statiques, du cylindre de dosage on introduit du fluide dans le couplage entre les ressorts hydropneumatiques et puis les ressorts hydropneumatiques se sépareront de manière aérodynamique l'un de l'autre
b) À influences dynamiques moderées du véhicule en fonction des facteurs statiques, du cylindre de dosage on introduit du fluide dans le couplage entre les ressorts hydropneumatiques, et la liaison entre les deux ressorts hydropneumatiques aussi bien que la liaison avec le cylindre de dosage reste ouverte et
c) À grandes influences dynamiques, du cylindre de dosage on introduit du fluide dans le couplage entre les ressorts hydropneumatiques et la liaison entre les ressorts hydropneumatiques et le volume de dosage reste ouverte mais on empêche une surintensité de courant, rapide entre les deux ressorts hydropneumatiques respectivement entre les ressorts hydropneumatiques et le cylindre de dosage.

15. Procédé selon la revendication 14, **caractérisé en ce que**, un facteur statique est l'état de chargement du véhicule.

16. Procédé selon l'une des revendications antérieures, **caractérisé en ce que**, un facteur statique est la température du gaz dans le système de suspension, spécialement dans les ressorts hydropneumatiques.

17. Procédé selon l'une des revendications antérieures, **caractérisé en ce que**, les facteurs dynamiques se déterminent directement aux suspensions des roues, spécialement à celles-là sur l'essieu antérieur, spécialement directement aux ressorts hydropneumatiques et en fonction de ceux-ci, on choisit de manière automatique le mode de travail conforme aux variantes a, b, c de la revendication 14 et spécialement on choisit la dimension du dosage dans le cylindre de dosage (3).

18. Procédé selon l'une des revendications antérieures, **caractérisé en ce que**, à grandes charges dynamiques, il est possible un courant rapide inverse du côté du ressort hydropneumatique (1a) antérieur par une ouverture de la soupape de décharge dans le ressort hydropneumatique (1b) postérieur et/ou dans le cylindre de dosage (3), spécialement sans le passage par un clapet.
